# EUROPEAN PATENT SPECIFICATION

(11) **EP 0 598 546 B1**
(45) Date of publication and mention of the grant of the patent: **07.10.1998**
(21) Application number: 93308955.9
(22) Date of filing: 09.11.1993
(51) Int. Cl.: G02B 3/02, G02B 19/00, F21V 5/04

(54) **Lenticular lenses**
Lentikulare Linsen
Lentilles lenticulaires

(30) Priority: 16.11.1992 US 976794; 16.11.1992 US 976581; 16.11.1992 US 976621
(43) Date of publication of application: 25.05.1994
(73) Proprietor: GENERAL ELECTRIC COMPANY, Schenectady, NY 12345 (US)
(72) Inventor: Golz, Thomas Michael, Willoughby Hills, Ohio 44094 (US)
(74) Representative: Goode, Ian Roy

(56) References cited:
- DE-C- 3 806 879
- US-A- 4 484 254
- US-A- 4 545 007

## Description

### BACKGROUND OF THE INVENTION

### Field of the Invention

This invention relates to a lenticular lens having improved light distribution. More particularly, this invention relates to a lenticular lens and its use with electric lamps, said lens having (i) multi-sided lenticules contained in a plurality of sections circumferentially arranged in a circle around the optical center of the lens, with the lenticules in each section oriented to reduce or avoid parallelism and/or (ii) having a multiplicity of lenticules arranged in a plurality of zones concentric around the optical center of the lens with the size and light spreading ability of the lenticules in each zone selected to provide a uniform light distribution over the desired light beam pattern.

### Background of the Disclosure

Exterior and interior lights such as flood and spotlights include an electric light source mounted within a reflector which is covered with a lens to break up the light source image and redirect the reflected light to the desired beam pattern to illuminate a particular zone or area. Uniform illumination is desired, but rarely achieved. The filament or arc discharge light source is three-dimensional and not a point source. This produces a light source image which must be broken up and diffused or eliminated by the lens. The lens type most commonly used and cheapest to manufacture for this purpose is a lenticulated lens made of light-transmissive glass or plastic containing a plurality of lenticules on the inner light receiving surface. These lenticules generally have a spherical or curved light entrance surface and terminate in a slightly curved or relatively flat exit surface. The lenticules are typically distributed across the lens in the form of a close packed, uniform, array of parallel rows and are therefore all of the same shape and size. In the case where the lenticules all have a spherical light-receiving surface, they are arranged in a close packed, uniform, hexagonal array of parallel rows. In theory, the spherical surface of the lenticules should produce a center weighted light distribution in the beam pattern with the light falling off smoothly in intensity toward the edge of the pattern. In fact this does not happen with lenses having lenticules in a uniform hexagonal array due to the physical properties of the glass, the lens molding process, the greater angular light bending strength in the corners of each lenticule and optical distortion at the edges of the hexagonal lenticules and the optical interaction of the hexagonal lenticules with the light source image reflected forward by the reflector into the lenticules. The uniform, close-packed hexagonal array of the hexagonally-shaped lenticules results in the same sides of all the lenticules being parallel. Each hexagonal-shaped lenticule produces a light beam having a hexagonal shaped perimeter, with the sides of the hexagonal perimeter being aligned with the sides of the lenticule. Since the same sides of all the lenticules are parallel, the hexagonal-shaped perimeter of the light beam projected forward through the lens is a summation of the hexagonal perimeter of the beams projected through all the lenticules. The light intensity of the straight sides of the hexagonal-shaped perimeter of the light pattern is exacerbated when a longitudinal light source image projected forward of the reflector is parallel to the sides of the lenticules. This is called "parallelism" and produces a light beam pattern which produces a light beam having a hexagonal perimeter which users refer to as the "hex pattern" and regard as objectionable.

By way of example, a close-packed hexagonal array of parallel rows of lenticules having a curved or spherical light-receiving surface distributed across the light-receiving side of a lens results in six different directions radially extending from the optical center of the lens to the optical edge of the lens, wherein the same side of each hexagonal lenticule is radially aligned parallel to the long axis of the light source images projected through the lenticules. This reinforces the filament or arc light source image projected in the six directions and produces the hexagonal-shaped light perimeter at the outer edge of the projected beam pattern. In the case of a circular lens, the beam pattern will be circular with a visibly discernible, hexagonal-shaped perimeter of light (hex pattern) around the outer edge of the beam pattern.

Furthermore, a light beam pattern is produced which the human eye perceives as light weighted in the center and edge of the pattern, with a lower level of light intensity in-between the center and edge. This gives a visual impression of a bright center surrounded by an apparent lower intensity light ring with a bright appearing light band or ring near the edge of the beam pattern. This ring of brighter or greater light intensity towards the edge is known as "the donut". Attempts to improve light distribution over the beam pattern have included a lenticular lens wherein the lenticules are aspherical in shape, with each lenticule divided into a plurality of coaxial zones and each zone having a different radius of curvature as disclosed in U.S. 4,545,007. Another attempted solution to the problem of non-uniform light distribution is disclosed in U.S. 5,043,856 as a mixture of spherical and aspherical lenticules uniformly distributed across the light-receiving surface of the lens. Random patterns such as shot stipple have also been tried.

### SUMMARY OF THE INVENTION

In one aspect, this invention relates to a lenticular lens as claimed in claim 1. Such a lens has or exhibits reduced parallelism and also reduces or eliminates the donut effect thereby producing improved light distribution when used with electric lamps. A lens according to this invention has an optical center, an optical edge, a light-receiving side, a light-emitting side and a multiplicity of multi-sided lenticules having a light-receiving surface for dispersing and spreading light entering the light-receiving surface. The lenticules are oriented to avoid parallelism and are arranged in a plurality of zones or bands concentric around the optical center of the lens with the size and light-spreading ability of the lenticules in each zone selected to contribute to a uniform light distribution over the desired light beam pattern when the lens is used with a reflector lamp. Orienting the multi-sided lenticules on the lens to avoid parallelism may be achieved by having the lenticules contained in a plurality of sections circumferentially arranged around the optical center of the lens, with the orientation of the lenticules being the same in a particular section, but different in orientation from lenticules in other sections. Further arranging the lenticules in a plurality of zones or bands essentially concentric about the optical center, with the size and light-spreading ability of the lenticules in each zone selected to provide or contribute to a more uniform light distribution over the desired light beam pattern helps to eliminate the donut effect. By plurality of zones is meant at least two and more preferably at least three. These zones go through the sections. In one embodiment the lenticules are distributed over the light-receiving side of the lens in a plurality of wedge-shaped sections circumferentially arranged around the optical center of the lens. The lenticules in each wedge-shaped section are distributed in a close-packed array of parallel rows whose longitudinal axis is oriented to reduce or avoid the sides of the lenticules from being parallel to the light image projected through each lenticule. In this arrangement, the close-packed hexagonal array of parallel rows in each section extends through the zones in each section, with the radius of the light-receiving surface of the lenticules being the same in a particular zone, but different from the radius of the lenticules in other zones. The optimum number of wedge-shaped sections is determined by the number of sides of the multi-sided lenticules and is generally equal to two or three times the number of such sides, depending on the particular shape. Thus, by way of example, the optimum number for triangular shaped lenticules is nine; for squares is eight or twelve, and for hexagons twelve.

Circular, light-transparent glass lenses have been made according to this invention having hexagonal-shaped lenticules contained in twelve wedge-shaped sections circumferentially arranged around the optical center of the lens in which there were four zones or bands concentric about the center which extended through all the sections. In each section the lenticules are arranged in a uniform, close-packed hexagonal array of parallel rows with the longitudinal axis of one of the rows in each section aligned radially from said optical center. Further, each section contains four zones in which the light-receiving spherical surface of the lenticules in the zone outermost from the optical center of the lens had the smallest radius, with the radius of the light-receiving surface of the lenticules in each successive zone increasing towards the optical center. Since the light-spreading ability of lenticules having a spherical light-receiving surface is inversely proportional to the lenticular radius, the lenticules in the outermost zone towards the optical edge of the lens having the smallest radius have the greatest light-spreading property while those in the zone nearest the optical center of the lens having the largest radius have the smallest light-spreading ability. Both of these lenses substantially reduced the donut effect when used on a reflector lamp.

When employed with a reflector lamp having an axially aligned filament light source these lenses have exhibited a substantially reduced donut effect and hexagonal perimeter around the edge of the projected light beam, compared to prior art lamps having the same size and shape lenticules arranged on the light-receiving side of the lens in a uniform, close-packed, hexagonal array of parallel rows extending across the light-receiving surface of the lens, so that all the lenticules on the lens had the same orientation and focal length.

In one embodiment the lenticules will have a spherical, light-receiving surface and will be arranged in a close packed hexagonal array of parallel rows extending across the lens and through the zones, with the radius of the light-receiving surface of the lenticules being the same in a particular zone, but different from the radius of the lenticules in other zones. Lenses have been made according to this embodiment having three zones and also four zones, in which the light-receiving spherical surface of the lenticules in the zone outermost from the optical center of the lens had the smallest radius, with the radius of the light-receiving surface of the lenticules in each successive zone increasing towards the optical center. Since the light-spreading ability of lenticules having a spherical light-receiving surface is inversely proportional to the lenticular radius, the lenticules in the outermost zone towards the optical edge of the lens having the smallest radius have the greatest light-spreading property while those in the zone nearest the optical center of the lens having the largest radius have the smallest light-spreading ability. Both of these lenses substantially reduced the donut effect when used on a reflector lamp.

### BRIEF DESCRIPTION OF THE DRAWINGS

Figure 1 schematically illustrates a reflector lamp having a lenticular lens according to one embodiment of the invention.

Figure 2(a) schematically illustrates a view of a filament image projection.

Figure 2(b) schematically illustrates a prior art lenticular lens having uniform, hexagonal close-packed lenticules.

Figure 2(c) illustrates a hexagonal lenticule superimposed over the filament image projection of Figure 2(a).

Figure 2(d) illustrates the hexagonal light beam pattern resulting from a lens of 2(b) in combination with the radial filament image projection of 2(a).

Figure 3 illustrates the light-receiving side of a lens according to the invention.

Figure 4 is a view of the light-receiving side of a lens of another embodiment.

### DETAILED DESCRIPTION

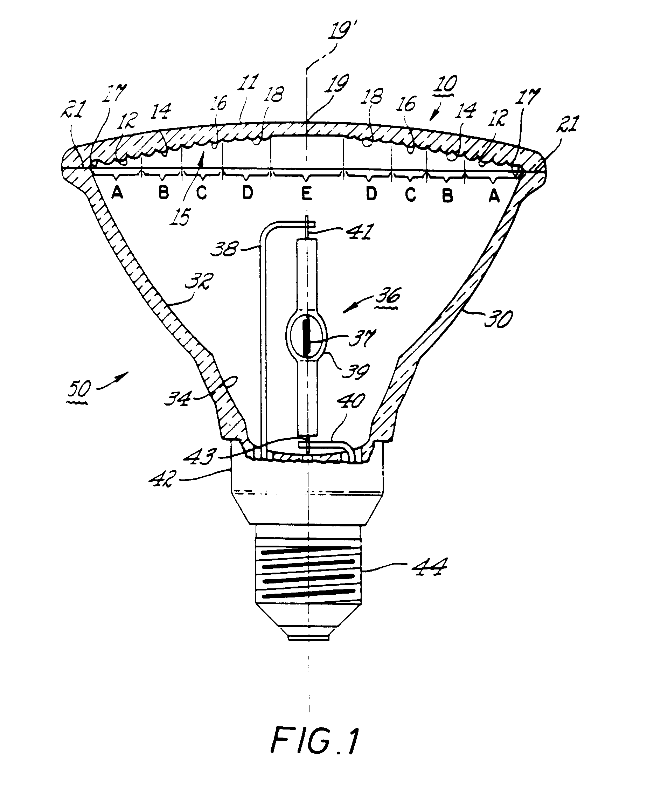

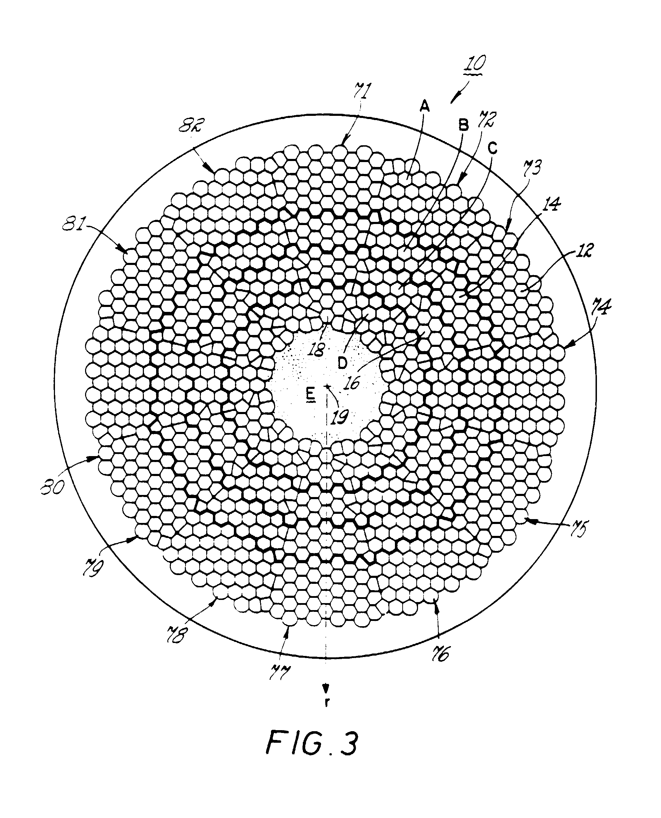

Figure 1 schematically illustrates a glass reflector lamp 50 according to the invention comprising a lenticular glass lens 10 of the invention sealed by cement or fusion at flat rim portion 21 to the forward light-projecting end of glass reflector 30 which terminates at its other end in a metal lamp base comprising collar 42 crimped onto the bottom (not shown) of the reflector and standard metal screw base 44. In the embodiment shown, glass reflector 30 has two metallized (i.e., aluminum) interior reflecting surfaces 32 and 34. A double-ended incandescent lamp 36 having a filament 37 supported within lamp envelope 39 of lamp 36 by means not shown is connected by outer leads 41 and 43 to metal support rods 38 and 40 which also serve to conduct electricity to the filament from attachments (not shown) to base portion 44. Lamp 36 has its longitudinal axis coincident with (or generally parallel to) the longitudinal axis of the lamp (assembly) 50 and transverse to the general plane of lens 10. Although lamp 36 is illustrated as a double-ended incandescent lamp, it could also be a single-ended incandescent lamp, an arc lamp, a filament, or a pair of electrodes with an arc-sustaining fill also enclosed within lamp 50. Lens 10 is illustrated as a portion of a surface of a circle and is of relatively uniform thickness. However, other embodiments of the lens shape such as a meniscus lens, plano-convex, double convex, etc., may be employed within the context of the invention. Lens 10 also has an optical edge or outer area 17 and an optical center 19. In the embodiment shown optical center 19 is the geometric center of the lens and is also coincident with the longitudinal axis 19' of the lamp 50. Flat rim portion 21 is provided to achieve a seal to reflector 30. The outside surface 11, which is the light-emitting or exiting side of the lens, is illustrated as being smooth. The light-receiving side 15 of lens 10 contains a multiplicity of lenticules which, in the embodiment of the invention illustrated in Figure 3, are all hexagonally-shaped in the plane of the lens and all have the same hexagonal dimensions. In this embodiment, each lenticule has a spherically curved surface for receiving and dispersing or spreading the light emitted by the lamp and reflected forward through the lenticule by the reflector. The lenticules have four different radii 12, 14, 16 and 18, and are arranged in four respective zones A, B, C and D concentric around optical center 19 and extending through all of the sections. In the embodiment illustrated in Figures 1 and 3 the center portion E is stippled to provide a low spread visual contrast area for lettering and a logo which serve to identify the lens manufacturer. However, if desired, the lenticules could also extend to cover the center portion.

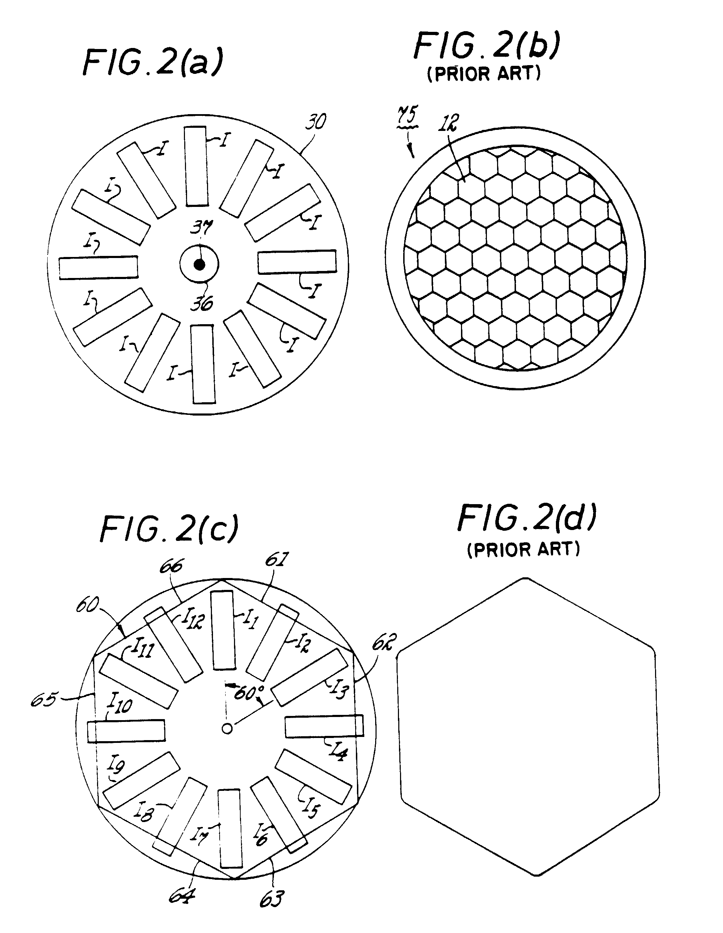

Figure 2(a) illustrates an imaginary, partial schematic view looking into reflector 30 containing lamp 36 and filament 37 axially aligned along 19' as illustrated in Figure 1. An axially aligned filament in a reflector projects an infinite number of radial filament images, I, circumferentially aligned around the filament as illustrated in Figure 2(a). This radial image orientation can actually be demonstrated by removing the lens from a reflector lamp as illustrated in Figure 1 and covering the open, light-projecting end where the lens would be with a light opaque material having a small hole in it. Moving the hole circumferentially around the opening of the reflector produces a beam pattern of a single filament image in which the projected filament image appears radially aligned as shown in 2(a), with the location and size of the image depending on the position of the hole and its radial distance from the filament. In Figure 2(a), twelve filament images equidistant (30°) from each other are illustrated for convenience.

Figure 2(b) schematically illustrates a prior art lens 75 having a multiplicity of hexagonal-shaped lenticules 12, all of the same size and having a spherical light-receiving surface of the same radius (not shown), arranged in a uniform, close-packed, hexagonal array of parallel rows extending across the light-receiving surface of the lens which looks like a honeycomb. Figure 2(c) illustrates the filament light image pattern of Figure 2(a) which contains a hexagon to illustrate the filament light image hexagonal reinforcement produced by the hexagonal lenticules of the prior art lens of Figure 2(b) to produce the circular light beam pattern of Figure 2(d) having a hexagonal perimeter. According to elemental geometry and as illustrated in Figure 2(c), each hexagonally-shaped lenticule has six sides in which opposing sides are parallel and each side is aligned at an angle of 60° from its nearest two neighbors. Accordingly, the six corresponding sides of all the lenticules will be aligned in a parallel and reinforcing fashion (parallelism) with the filament image of a longitudinal filament aligned with its longitudinal axis transverse to the plane of the lens as illustrated in Figure 2(c). The image is projected in a parallel and reinforcing fashion where the image is coincident with the six sides of the hexagon to produce the hexagonal perimeter at the edge of the light beam as is shown in Figure 2(d). By way of illustration, referring to Figure 2(c), a hexagon 60 having six sides identified as 61 through 66 representing a hexagonal-shaped lenticule (lens) is shown within the projected filament image pattern of Figure 2(a) and is oriented in the same manner as the hexagonal-shaped lenticules of the prior art lens illustrated in Figure 2(b). Referring to Figure 2(c), the longitudinal axis of filament images I₁ and I₇ are parallel to sides 62 and 65. The longitudinal axis of Images I₃ and I₉ are parallel to sides 63 and 66, while that of images I₅ and I₁₁ are parallel to sides 61 and 64. In all of these cases the parallel sides of the hexagonal-shaped lens or lenticule reinforces the parallel filament images. On the other hand, this parallelism does not exist for filament images I₂, I₄, I₆, I₈, I₁₀ and I₁₂. The sides of the lenticules tend to concentrate or reinforce those filament images whose longitudinal axes are parallel to the sides, the summation of which produces a light beam pattern having a six-sided perimeter of light as illustrated in Figure 2(d). The hexagonal border or periphery of the projected light beam pattern corresponds and is parallel to the six sides of the lenticules.

Figure 3 schematically illustrates a view of the light-receiving side 15 of a lens 10 according to the invention in which multi-sided (in the plane of the lens) lenticules are arrayed in a close-packed array of parallel rows, but which avoids the parallelism of the prior art lens of Figure 2(b) by having the multi-sided lenticules arrayed in wedge-shaped sections 71 through 82 circumferentially arranged in a circle around the optical center 19 of lens 10 so that none of the sides of the lenticules is radially aligned so as to be parallel to the projected filament image. The lens is generally planar and shaped like a portion of the surface of a sphere. A side view of the lens in Figure 3 is schematically illustrated in Figure 1. The multi-sided lenticules in each wedge-shaped section are arrayed so that none of the sides are radially aligned with respect to the optical center of the lens which would tend to reinforce the light source image. In the embodiment shown, each section 71 through 82 is somewhat frustoconical in shape in not coming to a point at the small end in order to obtain the stippled area E in the center of the lens. As illustrated in Figure 3, each section 71-82 contains a multiplicity of lenticules 12, 14, 16 and 18 which, except for edge effects, are all of the same hexagonal size and dimensions in the plane of the lens and are arranged in a uniform, close-packed, hexagonal array of parallel rows, with the longitudinal axis of the rows in each section parallel to each other and wherein the longitudinal axis of one of the rows is coincident to the radius of the circle in which the sections are circumferentially arranged around the optical center 19 of lens 10. The longitudinal axis of the middle row in each section is coincident with the radius of the circle in this embodiment. The lenticules are oriented so that none of the six sides of each lenticule in each section is parallel to the radius of the circle. This means that for a reflector lamp having an elongated light source axially mounted along the longitudinal reflector axis (or transverse to the plane of the lens), the longitudinal axis of the light source image radially projected by the reflector under each section of lenticules is not parallel to any edges of the lenticules in that section. This intentional arrangement avoids parallelism and also permits the corners of the lenticules to soften the image reinforcement that would have occurred if parallelism had existed.

In Figure 3, each of the twelve wedge-shaped sections is illustrated as having a uniform, close-packed array of hexagonal-shaped lenticules 12 all of the same size and arranged in parallel rows wherein the longitudinal axis of one of the rows in each section (the middle row in the embodiment shown) is radially aligned coincident with the radius r with respect to the optical center of the lens as illustrated for section 77. This means that all of the rows in each section are parallel to the radius coincident with the longitudinal axis of the middle row and, in the honeycomb pattern of the hexagonal-shaped lenticules, insures that none of the six sides of any of the lenticules is radially aligned (coincident with) about the optical center or parallel to a radius from the optical center. Hence, the parallelism of the prior art lens is thereby avoided. As set forth above, having twelve equal sections as shown in Figure 3 is the optimum number of sections for avoiding parallelism with hexagonal-shaped lenticules arranged in a uniform, close-packed array of parallel rows. In the embodiment of Figure 3 the lenticules in each particular section have the same orientation as all the other lenticules in that section. The lenticules in every other segment have the same orientation.

The four different radiused lenticules 12, 14, 16 and 18 are arranged in four essentially concentric areas or zones A, B, C and D, respectively, which are illustrated in Figure 3. All of the lenticules in zone A have the same radius which is different from the radius of the lenticules in zones B, C and D. Similarly, all of the lenticules in zone B have the same radius which is different from the radius of the lenticules in zones A, C and D. The radius of all the lenticules in zone C is the same which is different from the radius of the lenticules in zones A, B and D, while the radius of the lenticules in zone D are all the same, but different from zones A, B and C.

In the embodiment shown in Figures 1 and 3, the lenticules in zone A all have a radius smaller than the radius of the lenticules in zone B which, in turn, all have a radius smaller than the radius of the lenticules in zone C. All of the lenticules in zone C have a radius smaller in size than the radius of the lenticules in zone D, with all the lenticules in zone D having the largest radius. Thus, the radius of the lenticules in zone A which is outermost from the optical center 19 and nearest to the optical edge 17 of lens 10 is the smallest, with the radius of the lenticules increasing as one passes from zone to zone towards the center of lens 10. Also, in this embodiment the four lenticulated zones A, B, C and D are illustrated as being adjacent and sequential. The optical considerations involved for a reflector lamp such as that illustrated in Figure 1 having a filament at the focal point of a parabolic reflector are such that the angular width of the reflected filament image projected forward of the reflecting surface decrease with increasing distance from the filament or other light source. This decrease is a function of the inverse of the distance from the light source to the reflecting surface. This results in a decrease in the size of the forward reflected light source image from the center to the edge of the reflector or lens which, combined with the distortions in the edges of the lenticules due to the physical vagaries of the real world, results in a reflected light beam pattern which has a non-uniform light distribution from the center to the edge, either real or perceived by the viewer, or both. The lens of the invention corrects this by varying the focal length of the lenticules dependent on the light source or filament image width projected forward of the reflecting surface through the lenticules and the lens distortion effects so that the summation of donuts from each zone do not reinforce a strong visual edge, but smooth the projected light distribution. The most ideal solution would be to have the lenticules on the lens vary continuously according to the requirements dictated by the desired light beam pattern, the shape and size of the reflector and the shape and size of the light source. However, it is too costly to be practicable to machine a die for manufacturing such a lens. Thus, the lens of the invention is a compromise solution which has been found to be both optically effective and reasonably economical.

All of the hexagonal-shaped (in the plane of the lens) lenticules illustrated in the embodiment in Figure 3 are shown as being of the same dimensions as measured in the plane of the lens in order to achieve the uniform close-packed array of parallel rows. Those skilled in the art will appreciate that in order to achieve this, the protrusion or height of the lenticules 12 in zone A, which have the smallest radius, is greater than that of lenticules 14 in zone B which have a radius larger than those in zone A. Lenticules 14 in zone B in turn protrude more than those in zone C in which the radius of the lenticules 14 is greater than in zone B, etc.

Actual lenses of the invention have been pressed from glass having the characteristics of Figures 1 and 3 having an overall diameter of about 4-3/4 inches (including the rim portion) (1 inch = 25.4 mm) with the diameter of the lenticule portion being 4-3/8 inches except for the stippled central portion which was about 1 inch in diameter. Each wedge-shaped section included an angle of 30° and contained 85 lenticules for a total of 1020 lenticules on the lens. The lenticules all had a spherical light-receiving surface, with the radii in zones A, B, C and D being 0.095 inch, 0.102 inch, 0.125 inch and 0.182 inch, respectively. Broken into zones, there were 40 lenticules per section in zone A, 18 in zone B, 14 in zone C and 13 in zone D. The hexagons were all (except for edge effects at borders) about 1/8 inch long. Employing these lenses, as illustrated in Figure 3, with a lamp having a filament light source as illustrated in Figure 1, substantially reduced both the donut effect and the hex pattern compared to a prior art lens of the same size and having hexagonal shaped lenticules of 1/8 inch hexagonal dimension all having a 1/8 inch radius, spherical light-receiving surface arrayed in a uniform, close-packed hexagonal pattern as illustrated in Figure 2(b).

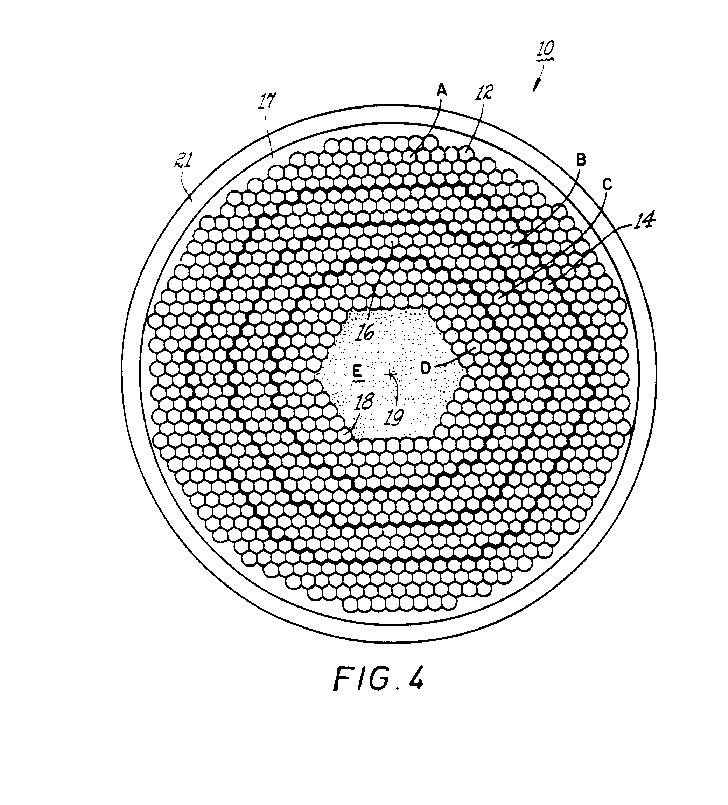

In the embodiment of Figure 4, the light-receiving side 15 of lens 10 contains a multiplicity of lenticules of four different sizes 12, 14, 16 and 18, arranged in four respective zones A, B, C and D concentric around optical center 19 (see Figure 1). All of the lenticules have a spherical surface for receiving and dispersing or spreading the light emitted by the lamp and projected forward by the reflector into the desired light beam pattern. The center portion E is stippled to provide a low spread visual contrast area for lettering and a logo which serve to identify the lens manufacturer. However, if desired, central lens portion E could also be lenticuled as part of the fourth zone, or to provide a fifth zone in which the radius of the lenticules is different from those in the fourth zone D. The four different sizes of lenticules 12, 14, 16 and 18 are arranged in four essentially concentric areas, bands or zones A, B, C and D, respectively. All of the lenticules in zone A are of the same size, and different in size from the lenticules in zones B and C. Similarly, all of the lenticules in zone B are of the same size, but different in size from those in zones A, C and D and the lenticules in zone C are all the same size, but different in size from the lenticules in zone A, in zone B and in zone D. The lenticules in zone D are all the same size which is different from the size of the lenticules in the other three zones. The outer portion or edge area 17 is stippled. This outer portion is stippled to reduce hot central beam filament images in an area of the lens where it is desirable not to have lenticules due to mold machining considerations and possible stress problems at the edge of the lens. As illustrated in Figure 1, the optical center 19 of lens 10 is also the geometric center and coincides with the longitudinal axis, 19' of lamp 50.

The lenticules in zone A all have the same radius which is smaller than the radius of the lenticules in zone B which, in turn, all have the same radius which is smaller than the radius of the lenticules in zone C which is smaller than the radius of the lenticules in zone D. All of the lenticules in zone D have the same radius. Thus, the radius of the lenticules in zone A which is outermost from the optical center 19 and nearest to the optical edge 17 of lens 10 is the smallest, with the radius of the lenticules increasing as one passes from zone to zone towards the center of lens 10. Also, in this embodiment the four lenticulated zones A, B, C and D are illustrated as being adjacent and sequential.

The optical considerations involved for a reflector lamp such as that illustrated in Figure 4 having a filament at the focal point of a parabolic reflector are such that the angular width of the reflected filament image projected forward of the reflecting surface decreases with increasing distance from the filament or other light source. This decrease is a function of the inverse of the distance from the light source to the reflecting surface. This results in a decrease in size of the forward reflected light source image from the center to the edge of the reflector or lens which, combined with the distortions in the edges of the lenticules due to the physical vagaries of the real world, results in a reflected light beam pattern which has a non-uniform light distribution from the center to the edge, either real or perceived by the viewer, or both. The lens of the invention corrects this by varying the focal length of the lenticules dependent on the light source or filament image width projected forward of the reflecting surface through the lenticules and the lens distortion effects, so that the summation of donuts from each zone do not reinforce a strong visual edge, but smooth the projected light distribution. The most ideal solution would be to have the lenticules on the lens vary continuously according to the requirements dictated by the desired light beam pattern, the shape and size of the reflector and the shape and size of the light source. However, it is too costly to be practicable to machine a die for manufacturing such a lens. Thus, the lens of the invention is a compromise solution which has been found to be both optically effective and reasonably economical.

Figure 4 schematically illustrates a rear view of lens 10 showing the lenticules arranged in four adjacent and sequential zones A, B, C and D concentric around the optical center 19 of the lens. It also illustrates all of the lenticules 12, 14, 16 and 18 arranged in a uniform, close-packed hexagonal array of parallel rows extending across the light-receiving surface of the lens, most of which rows extend through two and three zones. In the embodiment illustrated in Figure 4, each of the lenticules is hexagonal in shape taken in the plane of the lens. However, they could be some other shape, the choice of shape, area and radii being left to the practitioner depending on the desired shape of the projected light beam, the amount and type of lenticular distortions formed by the lens pressing or molding process associated with each area of the lens and the angular size and orientation of the reflected light source image projected forward and passing through each refractive lens area. As illustrated in Figure 2, all of the lenticules 12, 14, 16 and 18 present on the lens 10 fit into a close-packed hexagonal array of parallel rows from the top to the bottom, and extending across the width of the lens, with most of the rows extending through at least two zones and some through three and even four zones. Except for those lenticules not surrounded by six other lenticules (i.e., adjacent the center stippled portion E and the optical edge 17 of lens 10), each lenticule has the hexagonal shape characteristic of the hexagonal close-packed array formed by parallel rows of lenticules having a spherical light-receiving surface. Other lenticule shapes and configurations may be used in the practice of the invention.

All of the hexagonal-shaped (in the plane of the lens) lenticules illustrated in the embodiment in Figure 4 are shown as being of the same dimensions as measured in the plane of the lens in order to achieve the uniform close-packed array of parallel rows. Those skilled in the art will appreciate that in order to achieve this, the protrusion or height of the lenticules 12 in zone A, which have the smallest radius, is greater than that of lenticules 14 in zone B which have a radius larger than those in zone A. Lenticules 14 in zone B in turn protrude more than those in zone C in which the radius of the lenticules 14 is greater than in zone B and the lenticules in zone C protrude more than those in zone D in which the lenticules have the largest radius. This means that the focal length of the lenticules 12 in zone A is shorter than the focal length of lenticules 14 in zone B and that the lenticules 18 in zone D have the longest focal length. This also means that the lenticules 12 in zone A have the greatest light dispersing properties while those in zone D have the least.

Actual lenses of the invention have been pressed from glass having the characteristics of Figures 1 and 2 having both three zones as illustrated and also four zones. These lenses had an overall diameter of about 4-3/4 inches (including the rim portion) with the diameter of the lenticuled portion being 4-3/8 inches except for the stippled central portion which was about 1 inch in diameter. In the four-zone lens illustrated in Figures 1 and 2 having zones or bands A, B, C and D, zones A, B, C and D each contained 480, 216, 168 and 156 lenticules, respectively, for a total of 1020 lenticules on the lens. The lenticules all had a spherical light-receiving surface with a radius of about .095, .102, .125 and .182 inch for zones A, B, C and D, respectively, and the hexagons were (except for edge effects at borders) about 1/8 inch long in all four zones. Employing these lenses, as illustrated in Figure 4, with a lamp having a filament light source as illustrated in Figure 1 substantially reduced the donut effect compared to a prior art lens of the same size and having the same size and shape lenticules arrayed as illustrated in Figure 2(b).

In the embodiments above, each section is wedge-shaped, all sections are the same size and adjacent to two other sections, with the lenticules all of the same size and shape both within each section and in all sections. The four zones are also sequential and extend through all of the sections However, the above embodiment is intended to be illustrative, but non-limiting with respect to the invention. Thus, the lenticules could be different sizes and shapes such as the triangular and square (in the plane of the lens) multi-sided shapes mentioned above and the light-receiving surface may be spherical or an aspherical curved surface or cone-shaped, pyramid-shaped, etc., or contain a multiplicity of shapes and sizes within the same section. The circumferential sections also can be different shapes and sizes depending on the particular application, and do not necessarily have to be adjacent or wedge-shaped, the choice being left to the practitioner. The essence of the invention is the avoidance or reduction of the parallelism of the multi-sided lenticules to the light source image for the particular application of the lens by lenticule orientation, and reduction of the donut effect by the use of a plurality of zones permitting other modifications of the light-dispersing properties of the lens. For example, a lamp having a light source transverse to the lamp axis or generally parallel to the plane of the lens, will produce light source images having a longitudinal axis not radially oriented about the source as illustrated in Figure 2(a) in some regions of the reflector. The orientation of the multi-sided lenticules on a lens of the invention for such an application will have to be adjusted according to the light source image projection at different portions to avoid parallelism by avoiding or minimizing alignment of any of the lenticule sides parallel to the projected light source image.

## Claims

1. A lenticular lens (10) comprising an optical center (19), an optical edge (17), a light-receiving side (15), and a light-transmitting side (11), and a multiplicity of multi-sided lenticules (12, 14, 16, 18) arranged on said light-receiving side (15) for dispersing and spreading light, characterized in that said lenticules (12, 14, 16, 18) are arranged in a plurality of zones or bands (A-D) concentric around the optical center (19) of said lens, the light dispersing ability of the lenticules of each zone becoming progressively greater toward the optical edge, and oriented to avoid parallelism when used to disperse light from a light source (36) into a desired beam pattern.

2. A lens according to claim 1, wherein said lenticules are arranged in a plurality of sections (71-82) circumferentially arranged in a circle around said optical center (19) and extending through at least a portion of said zones (A-D), and wherein the size and light-spreading ability of said lenticules (12, 14, 16, 18) in each zone is selected to provide a uniform light distribution over the desired light beam pattern.

3. A lens according to claim 2, wherein said sections (71-82) are wedge-shaped.

4. A lens according to claim 1, 2, or 3, wherein said lenticules in each particular zone (A-D) are of substantially the same size and have essentially the same light-spreading ability.

5. A lens according to claim 2, 3, or 4, in which said lenticules (12, 14, 16, 18) are distributed in said sections (71-82) in a close-packed array of parallel rows whose longitudinal axis is oriented to avoid the sides of said lenticules from being parallel to a light image projected through each lenticule.

6. A lens according to any one of claims 1 to 5, in which said lenticules (12, 14, 16, 18) are arranged in a uniform, close-packed hexagonal array of parallel rows with the longitudinal axis of one of said rows in each said section radially aligned from said optical center.

7. A lens according to any one of claims 1 to 6, wherein at least a portion of said lenticules (12, 14, 16, 18) have a curved, light-receiving surface (15).

8. A lens according to claim 7, wherein said lenticules (12, 14, 16, 18) have a spherical, light-receiving surface, and wherein all of said lenticules (12, 14, 16, 18) are arrayed in a uniform, hexagonal, close-packed pattern across said lens.

9. A lens according to any one of claims 1 to 8, in which said lenticules (12, 14, 16, 18) have a hexagonal shape in the plane of said lens.

10. A lens according to claim 9, in which said lenticules (12, 14, 16, 18) have a spherical light-receiving surface.

11. A lens according to any one of claims 2 to 10, wherein said lenticules (12, 14,16,18) have multiple sides on said light-receiving side (15), the number of sections (71-82) being at least twice the number of sides of the lenticules (12, 14, 16, 18).

12. A lens according to any one of claims 3 to 11, wherein said wedge-shaped sections (71-82) are disposed sequentially and adjacent to one another.

## Patentansprüche

1. Bikonvexe Linse (10) enthaltend eine optische Mitte (19), einen optischen Rand (17), eine lichtaufnehmende Seite (15) und eine lichtdurchlassende Seite (11) und eine Vielzahl von vielseitigen kleinen Linsen (12,14, 16,18), die auf der lichtempfangenden Seite (15) angeordnet sind zum Streuen und Verteilen von Licht,
dadurch gekennzeichnet, daß die Kleinlinsen (12,14,16, 18) in mehreren Zonen oder Bändern (A-D) konzentrisch um die optische Mitte (19) der Linse herum angeordnet sind, wobei das Lichtstreuvermögen der Kleinlinsen von jeder Zone zunehmend größer wird in Richtung auf den optischen Rand, und sie orientiert sind zum Verhindern von Parallelität, wenn sie zum Streuen von Licht von einer Lichtquelle (36) in ein gewünschtes Bündelmuster verwendet sind.

2. Linse nach Anspruch 1, wobei die Kleinlinsen in mehreren Abschnitten (71-82) angeordnet sind, die in Umfangsrichtung in einem Kreis um die optische Mitte (19) herum angeordnet sind und sich durch wenigstens einen Teil der Zonen (A-D) erstrecken, und wobei die Größe und das Lichtstreuvermögen der Kleinlinsen (12,14,16, 18) in jeder Zone gewählt sind, um für eine gleichförmige Lichtverteilung über das gewünschte Lichtbündelmuster zu sorgen.

3. Linse nach Anspruch 2, wobei die Abschnitte (71-82) keilförmig sind.

4. Linse nach Anspruch 1, 2 oder 3, wobei die Kleinlinsen in jeder bestimmten Zone (A-D) im wesentlichen die gleiche Größe und im wesentlichen das gleiche Lichtstreuvermögen haben.

5. Linse nach Anspruch 2,3 oder 4, wobei die Kleinlinsen (12,14,16,18) in den Abschnitten (71-82) in einer dicht gepackten Anordnung (Array) von parallelen Reihen verteilt sind, deren Längsachse orientiert ist, um zu vermeiden, daß die Seiten der Kleinlinsen parallel zu einem Lichtbild sind, das durch jede Kleinlinse projiziert wird.

6. Linse nach einem der Ansprüche 1 bis 5, wobei die Kleinlinsen (12,14,16,18) in einer gleichförmigen, dicht gepackten hexagonalen Anordnung (Array) von parallelen Reihen angeordnet sind, wobei die Längsachse von einer der Reihen in jedem Abschnitt von der optischen Mitte radial ausgerichtet ist.

7. Linse nach einem der Ansprüche 1 bis 6, wobei wenigstens ein Teil der Kleinlinsen (12,14,16,18) eine gekrümmte, lichtempfangende Oberfläche (15) haben.

8. Linse nach Anspruch 7, wobei die Kleinlinsen (12,14,16, 18) eine sphärische lichtempfangende Oberfläche haben und wobei alle Kleinlinsen (12,14,16,18) in einem gleichförmigen, hexagonalen, dicht gepackten Muster über der Linse angeordnet sind.

9. Linse nach einem der Ansprüche 1 bis 8, wobei die Kleinlinsen (12,14,16,18) in der Ebene der Linse eine hexagonale Form haben.

10. Linse nach Anspruch 9, wobei die Kleinlinsen (12,14,16, 18) eine sphärische lichtempfangende Oberfläche haben.

11. Linse nach einem der Ansprüche 2 bis 10, wobei die Kleinlinsen (12,14,16,18) viele Seiten auf der lichtempfangenden Seite (15) haben, wobei die Anzahl der Abschnitte (71-82) wenigstens das Zweifache der Anzahl der Seiten der Kleinlinsen (12,14,16,18) beträgt.

12. Linse nach einem der Ansprüche 3 bis 11, wobei die keilförmigen Abschnitte (71-82) aufeinanderfolgend und benachbart zueinander angeordnet sind.

## Revendications

1. Lentille lenticulaire (10) comprenant un centre optique (19), un bord optique (17), une face (15) de réception de la lumière, une face (11) de transmission de la lumière et une multiplicité de lenticules (12, 14, 16, 18) à côtés multiples, disposées sur ladite face (15) de réception de la lumière pour disperser et étaler la lumière, caractérisée en ce que lesdites lenticules (12, 14, 16, 18) sont disposées dans une pluralité de zones ou bandes (A-D) concentriques autour du centre optique (19) de ladite lentille, la capacité de dispersion de la lumière des lenticules de chaque zone devenant progressivement plus importante en direction du bord optique, et orientées pour éviter le parallélisme quand elles sont utilisées pour disperser une lumière provenant d'une source de lumière (36) selon une configuration de faisceau souhaitée.

2. Lentille selon la revendication 1, dans laquelle lesdites lenticules sont disposées en une pluralité de sections (71-82) disposées en un cercle autour dudit centre optique (19) et s'étendant dans une partie au moins desdites zones (A-D), et dans laquelle la taille et la capacité d'étalement de la lumière desdites lenticules (12, 14, 16, 18) de chaque zone sont choisies pour donner une distribution uniforme de la lumière sur la configuration de faisceau lumineux souhaitée.

3. Lentille selon la revendication 2, dans laquelle lesdites sections (71-82) ont une forme de coins.

4. Lentille selon la revendication 1, 2 ou 3, dans laquelle lesdites lenticules de chaque zone particulière (A-D) ont sensiblement la même taille et ont sensiblement la même capacité d'étalement de la lumière.

5. Lentille selon la revendication 2, 3 ou 4, dans laquelle lesdites lenticules (12, 14, 16, 18) sont réparties dans lesdites sections (71-82) selon un réseau compact de rangées parallèles dont l'axe longitudinal est orienté pour éviter que les côtés desdites lenticules soient parallèles à une image lumineuse projetée à travers chaque lenticule.

6. Lentille selon l'une quelconque des revendications 1 à 5, dans laquelle lesdites lenticules (12, 14, 16, 18) sont disposées en un réseau hexagonal compact et uniforme de rangées parallèles, l'axe longitudinal de l'une desdites rangées de chaque section étant aligné radialement depuis ledit centre optique.

7. Lentille selon l'une quelconque des revendications 1 à 6, dans laquelle une partie au moins desdites lenticules (12, 14, 16, 18) a une face (15) de réception de la lumière qui est courbe.

8. Lentille selon la revendication 7, dans laquelle lesdites lenticules (12, 14, 16, 18) ont une face de réception de la lumière qui est sphérique et dans laquelle toutes lesdites lenticules (12, 14, 16, 18) sont disposées en une configuration uniforme et hexagonale compacte sur ladite lentille.

9. Lentille selon l'une quelconque des revendications 1 à 8, dans laquelle lesdites lenticules (12, 14, 16, 18) ont une forme hexagonale dans le plan de ladite lentille.

10. Lentille selon la revendication 9, dans laquelle lesdites lenticules (12, 14, 16, 18) ont une face de réception de la lumière qui est sphérique.

11. Lentille selon l'une quelconque des revendications 2 à 10, dans laquelle lesdites lenticules (12, 14, 16, 18) ont de multiples cotés sur ladite face (15) de réception de la lumière, le nombre de sections (71-82) étant au moins le double du nombre de côtés des lenticules (12, 14, 16, 18).

12. Lentille selon l'une quelconque des revendications 3 à 11, dans laquelle lesdites sections (71-82) en forme de coins sont disposées les unes à la suite des autres et sont adjacentes les unes aux autres.
